# EUROPÄISCHE PATENTSCHRIFT

(11) **EP 3 473 458 B1**
(45) Veröffentlichungstag und Bekanntmachung des Hinweises auf die Patenterteilung: **02.10.2019**
(21) Anmeldenummer: 17196907.4
(22) Anmeldetag: 17.10.2017
(51) Int. Cl.: B60J 5/06

(54) **HORIZONTALSPANNER FÜR SEITENSPANNPLANENSYSTEME**
HORIZONTAL TENSIONER FOR TENSIONINGSYSTEM OF TARPAULIN
TENSEUR POUR SYSTÈME TENSION D'UNE BÂCHE LATÉTRALE

(43) Veröffentlichungstag der Anmeldung: 24.04.2019
(73) Patentinhaber: Franz Miederhoff oHG, 59846 Sundern (DE)
(72) Erfinder: Papenheim, Josef, 59846 Sundern (DE)
(74) Vertreter: Patentanwälte Dörner & Kötter PartG mbB

(56) Entgegenhaltungen:
- EP-A1- 2 551 152
- EP-A2- 1 642 683
- EP-A2- 2 860 062
- DE-U1-202016 101 450
- GB-A- 2 258 805

## Beschreibung

Die Erfindung betrifft einen Horizontalspanner für ein Seitenspannplanensystem, umfassend ein Gehäuse mit einer Spannwelle, die drehfest mit einem außerhalb des Gehäuses seitlich angeordneten Kupplungsstück zur drehfesten Verbindung mit einem Standrohr des Seitenspannplanensystems verbunden ist und auf der ein Zahnrad drehfest angeordnet ist, über das die Spannwelle mittels eines schwenkbar angeordneten Spannhebels antreibbar ist.

Als Planenaufbau ausgebildete Nutzfahrzeugaufbauten umfassen Seitenplanen, die in vertikaler Richtung durch eine Vielzahl von am unteren Planenabschluss angeordneten Seitenplanenspannern sowie in horizontaler Richtung durch so genannte Horizontalspanner in ihrer die Aufbauseite verschließenden Stellung gespannt sind. Das Spannen der Seitenplanen erfolgt durch horizontales Verspannen der Plane sowie anschließender Verspannung in vertikaler Richtung. Horizontalspanner der vorliegenden Art werden zum horizontalen Spannen einer Seitenplane eingesetzt. Die horizontalen Spanner sind dabei am vorderen oder hinteren Ende des Aufbaus unterhalb einer eckbildenden Runge seitlich am Längsträger angeordnet. Nach oben von dem Horizontalspanner in Richtung der Seitenplane hervorragend ist ein auf einer Spannwelle angeordnetes Kupplungsstück vorgesehen, auf welches ein mit der Seitenplane randlich verbundenes Standrohr zum Spannen der Plane aufsetzbar ist. Die Spannwelle ihrerseits steht im Eingriff mit einer durch ein Handrad zu bedienenden Antriebswelle, wobei der Antriebswelle eine Antriebsschnecke und der Spannwelle ein mit der Antriebsschnecke im Eingriff stehendes Zahnrad zugeordnet ist. Durch Drehung des Handrades erfolgt eine Drehung der Spannwelle mit dem Kupplungsstück und somit ebenfalls des Standrohres, so dass die Seitenplane durch aufrollen auf das Standrohr spannbar ist.

Seitenplanen werden regelmäßig einseitig durch Horizontalspanner der vorgenannten Art gespannt, weshalb diese entweder am vorderen oder am hinteren Ende eines Aufbaus angeordnet sind. Durch die winklige Anordnung zwischen der Spannwelle mit dem Kupplungsstück und der Antriebswelle mit dem Handrad ist zwar die Bedienbarkeit eines solchen Horizontalspanners gegenüber solchen Horizontalspannern, die mithilfe eines Knebels eine direkte Drehbewegung auf das Kupplungsstück ausüben, verbessert. Nachteilig ist jedoch bei einem solchen Horizontalspanner sowie auch bei den übrigen vorbekannten Horizontalspannern, dass diese in Abhängigkeit von ihrer orientierten Ausgestaltung entweder in Fahrtrichtung vorne links, bzw. in Fahrtrichtung hinten rechts, oder in Fahrtrichtung vorne rechts, bzw. in Fahrtrichtung hinten links angeordnet werden können. Ein Horizontalspanner ist folglich lediglich an zwei sich diagonal gegenüberliegenden Positionen positionierbar. Daher müssen, um einem Nutzfahrzeugaufbau mit einem solchen Horizontalspannsystem zu versehen, zwei unterschiedlich orientierte Horizontalspanner eingesetzt werden.

Zur Lösung dieser Aufgabe ist in der DE 298 08 736 U1 ein Horizontalspanner beschrieben, dessen Spannwelle an beiden Enden jeweils gleichartige, jedoch in entgegengesetzten Richtungen wirkende Kupplungsstücke angeordnet sind. Dieser Horizontalspanner beansprucht jedoch einen erheblichen Bauraum. Ein weiterer Horizontalspanner ist in der DE 20 2016 101 450 U1 beschrieben.

Hier will die Erfindung Abhilfe schaffen. Der Erfindung liegt die Aufgabe zugrunde, einen Horizontalspanner für ein Seitenspannplanensystem bereitzustellen, der an jeder beliebigen Position, d.h. in Fahrtrichtung von vorne links, bzw. hinten rechts, oder auch vorne rechts, bzw. hinten links eingesetzt werden kann und der einen geringen Bauraum beansprucht. Erfindungsgemäß wird diese Aufgabe durch einen Horizontalspanner mit den Merkmalen des kennzeichnenden Teils des Patentanspruchs 1 gelöst.

Mit der Erfindung ist ein Horizontalspanner für ein Seitenspannplanensystem bereitgestellt, der an jeder beliebigen Position an einem als Planenaufbau ausgebildeten Nutzfahrzeugaufbau einsetzbar ist und der einen geringen Bauraum aufweist. Dadurch, dass das Gehäuse und der Spannhebel eine erste Durchführung aufweisen, in welcher die Spannwelle von beiden Seiten einsetzbar ist, wobei die Befestigungsplatte einen aus dem Gehäuse auskragenden Anschlussflansch aufweist und wobei in das Gehäuse eine zweite Durchführung eingebracht ist, in welche die Befestigungsplatte von beiden Seiten einsetzbar ist, sind die Spannwelle und die Befestigungsplatte in zwei unterschiedlichen Orientierungen in dem Gehäuse positionierbar, wobei das Kupplungsstück sowie der Anschlussflansch der Befestigungsplatte an der gewünschten Seite seitlich aus dem Gehäuse hinausragen. Der Anschlussflansch ermöglicht eine einfache endseitige Verschraubung des Horizontalspanners mit dem Nutzfahrzeugaufbau. Bevorzugt ist das Zahnrad mit einem zentrischen Durchbruch versehen, über den es in beiden Orientierungen auf die Spannwelle aufsteckbar ist, wobei die Spannwelle und der Durchbruch des Zahnrades korrespondierend zueinander unrund ausgebildet sind.

In Weiterbildung der Erfindung ist der Anschlussflansch derart versetzt an der Befestigungsplatte angeordnet, dass er auf einer Ebene mit der dem Spannhebel entgegengesetzten Gehäuseseite liegt. Hierdurch ist eine gleichmäßige Anlagefläche erzielt.

In Ausgestaltung der Erfindung ist der Spannhebel durch zwei einen Bedienabschnitt und einen Funktionsabschnitt aufweisende Hebelblätter gebildet, deren Funktionsabschnitte bei aneinander liegenden Bedienabschnitten beabstandet zueinander beidseitig des Zahnrades angeordnet sind. Hierdurch ist ein in Form einer Gabel ausgebildeter Spannhebel erzielt, der einfach und zugleich gewichtsminimiert herstellbar ist.

In weiterer Ausgestaltung der Erfindung sind die Hebelblätter identisch ausgebildet. Hierdurch ist eine kostengünstige Herstellung erzielt.

In Weiterbildung der Erfindung ist der Spannhebel mit einer Mitnehmerraste versehen, die schwenkbar an dem Spannhebel gegen das Zahnrad über ein Federelement vorgespannt gelagert ist und derart ausgebildet ist, dass sie bei Schwenkbewegung des Spannhebels in Spannrichtung an einer Flanke des Zahnrades anliegt und dieses antreibt und bei Schwenkbewegung entgegen der Spannrichtung federnd an dem Zahnrad entlanggleitet. Hierdurch ist ein einfacher und zugleich robuster Antrieb der Spannwelle über den Spannhebel in Art einer Ratsche erzielt.

Dabei ist bevorzugt an dem Gehäuse eine Sperrraste schwenkbar gelagert und gegen das Zahnrad über ein Federelement vorgespannt angeordnet, die derart ausgebildet ist, dass sie bei Rotation des Zahnrades in Spannrichtung federnd an diesem entlanggleitet und eine Rotation des Zahnrades entgegen der Spannrichtung durch Anlage an einer dessen Flanken blockiert. Hierdurch ist einem ungewollten, selbsttätigen Abrollen der Seitenplane entgegengewirkt.

In weiterer Ausgestaltung der Erfindung der Erfindung ist an dem Spannhebel wenigstens ein Nocken zur Auslenkung der Sperrraste entgegen Ihrer Vorspannung angeordnet. Dabei ist die Mitnehmerraste vorteilhaft derart verschwenkbar an dem Spannhebel angeordnet, dass sie aus dem Eingriffsbereich des Zahnrades herausschwenkbar ist. Hierdurch ist eine einfache Freigabe bzw. Entsperrung des Zahnrades sowie der mit diesem Zahnrad drehfest verbundenen Spannwelle ermöglicht, wodurch eine einfache Entspannung der Seitenplane erzielbar ist.

In Weiterbildung der Erfindung weist die Mitnehmerraste bevorzugt zwei seitlich auskragende Stege auf, die in einer ausgeschwenkten Position der Mitnehmerraste, in der diese außer Eingriff mit dem Zahnrad ist, in jeweils einer in dem Spannhebel eingebrachten Mulde anliegen. Hierdurch ist eine stabile Außer-Eingriff-Position der Mitnehmerraste erzielt. Vorteilhaft ist der Spannhebel durch zwei identisch ausgebildete Hebelblätter gebildet ist, deren Funktionsabschnitte jeweils an ihren beiden Längsseiten einen Nocken aufweisen. Dabei ist in die Grundplatte des Gehäuses bevorzugt wenigstens eine Vertiefung oder eine Ausnehmung eingebracht, in welche in eingeschwenkter Position des Spannhebels die der Grundplatte zugewandten Nocken der Hebelblätter eintauchen. Hierdurch ist eine reduzierte Bauhöhe des Horizontalspanners ermöglicht.

Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:

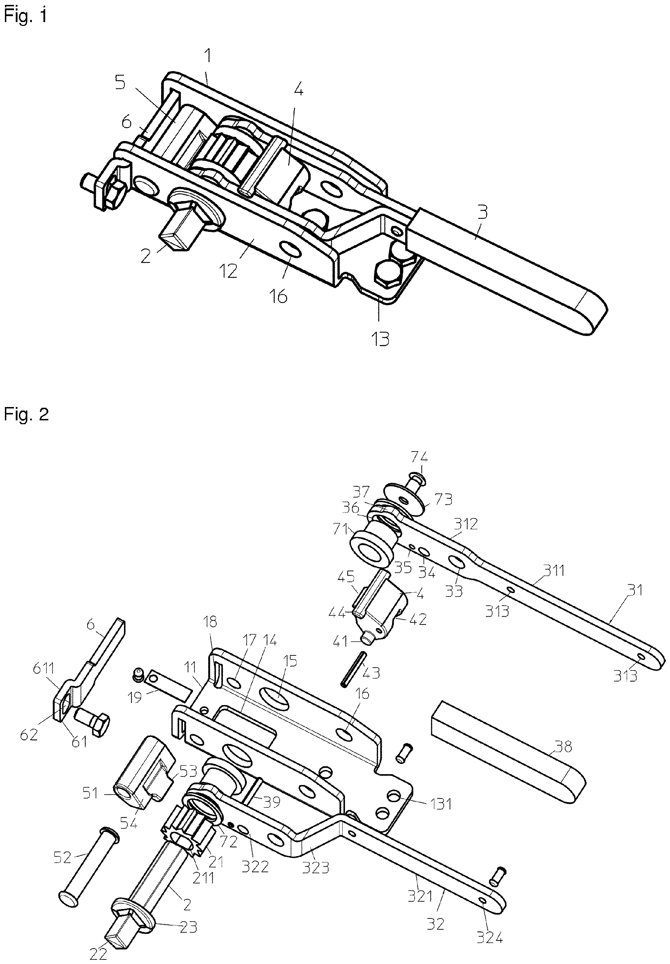

- Figur 1: die schematische räumliche Darstellung eines Horizontalspanners und
- Figur 2: den Horizontalspanner aus Figur 1 in einer Explosionsdarstellung.

Der als Ausführungsbeispiel gewählte Horizontalspanner besteht im Wesentlichen aus einem Gehäuse 1, in dem eine drehfest mit einem Zahnrad 21 versehene Spannwelle 2 drehbar gelagert ist sowie einem Spannhebel 3, der mit einer Mitnehmerraste 4 zum Eingriff in das Zahnrad 21 versehen ist. Weiterhin ist eine Sperrraste 5 zur Drehhemmung der mit dem Zahnrad 21 versehenen Spannwelle 2 in Gegenspannrichtung sowie einer Anschlagplatte 6 zur Befestigung des Horizontalspanners an einem Planenaufbau angeordnet.

Das als Blechstanzbiegeteil ausgeführte Gehäuse 1 besteht im Wesentlichen aus einer Grundplatte 11, an deren Längsseiten gegenüberliegend zwei Seitenwangen 12 angeformt sind, so dass ein U-Profil gebildet ist. Über die Seitenwangen 12 hinausragend geht die Grundplatte 11 in eine Befestigungszunge 13 über, die mit Bohrungen 131 versehen ist. An ihrem der Befestigungszunge 13 gegenüberliegenden Ende ist in die Grundplatte 11 eine rechteckförmige Ausnehmung 14 eingebracht. Die Seitenwangen 12 sind gegenüberliegend zueinander fluchtend jeweils mit einer ersten Durchführungsbohrung 15 versehen, welche eine Durchführung für die Spannwelle 2 bilden. Beabstandet zu den ersten Durchführungsbohrungen 15 sind jeweils zueinander fluchtend in den Seitenwangen 12 weiterhin auf ihrer der Befestigungszunge 13 zugewandten Seite jeweils eine erste Plombierbohrung 16 sowie auf der diesen gegenüberliegenden Seite jeweils eine Achsbohrung 17 eingebracht. Beabstandet zu den Achsbohrungen 17 sind die Seitenwangen 12 endseitig weiterhin zueinander fluchtend mit jeweils einem Schlitz 18 versehen, welche Schlitze 18 eine zweite Durchführung zur Aufnahme der Anschlagplatte 6 ausbilden.

Die Spannwelle 2 ist im Wesentlichen in Art eines Quaders ausgebildet, dessen Längsseitenwände abgerundet ausgebildet sind. An einem Ende ist an die Spannwelle 2 ein Kupplungsstück 22 mit quadratischem Querschnitt angeformt, wobei die Spannwelle 2 im Übergang zum Kupplungsstück 22 einen umlaufenden Kragen 23 aufweist. Auf die Spannwelle 2 ist das Zahnrad 21 aufgeschoben, dass hierzu einen Durchbruch 211 aufweist, der im Querschnitt im Wesentlichen dem Querschnitt der Spannwelle 2 entspricht.

Der Spannhebel 3 ist zusammengesetzt aus einem ersten Hebelblatt 31 und einem an diesem anliegenden zweiten Hebelblatt 32. Das erste Hebelblatt 31 weist einen Bedienabschnitt 311 auf, der in einen verbreiterten Funktionsabschnitt 312 übergeht. Der Bedienabschnitt 311 ist mit Bohrungen 313 zur Befestigung an dem zweiten Hebelblatt 32 versehen. In dem Funktionsabschnitt 312 sind beabstandet zueinander eine zweite Plombierbohrung 33, eine erste Achsbohrung 34, eine zweite Achsbohrung 35 sowie eine zweite Durchführungsbohrung 36 eingebracht. Zwischen der zweiten Plombierbohrung 33 und der ersten Achsbohrung 34 ist in die der Grundplatte 11 gegenüberliegende Kante des Hebelblatts 31 eine - nicht dargestellte - Mulde eingebracht. Beabstandet zu dieser Mulde ist an diese Seitenkante des Hebelblatts 31 in Höhe der zweiten Durchführungsbohrung 36 weiterhin ein Nocken 37 angeformt.

Das zweite Hebelblatt 32 ist korrespondierend zu dem ersten Hebelblatt 31 ebenfalls aus einem Bedienabschnitt 321 und einem Funktionsabschnitt 322 gebildet, zwischen denen jedoch ein Winkelabschnitt 323 angeordnet ist, derart, dass die Funktionsabschnitte 312, 322 der beiden Hebelblätter 31, 32 bei aneinander liegenden Bedienabschnitten 311, 321 beabstandet gegenüberliegend positioniert sind. Der Funktionsabschnitt 322 des zweiten Hebelblatts 32 ist entsprechend dem Funktionsabschnitt 312 des ersten Hebelblatts 321 jeweils zueinander fluchtend mit einer zweiten Plombierbohrung 33, einer ersten Achsbohrung 34, einer zweiten Achsbohrung 35, einer zweiten Durchführungsbohrung 36, einer - nicht dargestellten - Mulde sowie einem Nocken 37 versehen. Auf die miteinander über durch deren Bohrungen 313, 324 geführte Nieten miteinander verbundenen Bedienabschnitte 311, 321 der beiden Hebelblätter 31, 32 ist eine diese umhüllenden Griffhülse 38 aufgeschoben.

Die Mitnehmerraste 4 ist im Ausführungsbeispiel aus Stahlguss hergestellt und weist zwei seitlich auskragende Achsschenkel 41 auf, die in die zueinander fluchtenden ersten Achsbohrungen 34 des Spannhebels 3 eingreifen, wodurch die Mitnehmerraste 4 schwenkbar zwischen den Funktionsabschnitten 312, 322 gelagert ist. Mittig ist zwischen den Achsschenkeln 21 in die Mitnehmerraste 4 eine Tasche 42 eingebracht, in der eine erste Federachse 43 angeordnet ist. Die erste Federachse 43 nimmt eine - nicht dargestellte - Schraubenfeder auf, deren gegenüberliegendes Ende an einer zweiten Federachse 39 befestigt ist, die in die zweiten Achsbohrungen 35 der Funktionsabschnitte 312, 322 des Spannhebels 3 diese verbindend eingebracht ist. An seiner der Federachse 43 gegenüberliegenden Seite ist an die Mitnehmerraste 4 ein diese beidseitig überragender Quersteg 44 zur Anlage in den - nicht dargestellten - Mulden der Funktionsabschnitte 312, 322 des Spannhebels 3 angeformt. Beabstandet zu dem Quersteg 44 ist ein Mitnehmer 45 angeformt. Die Außenkontur des Mitnehmers 45 entspricht im Wesentlichen der durch zwei benachbarte Flanken des Zahnrades 21 gebildeten Einkerbung, in welche der Mitnehmer 45 eingreift.

Die ebenfalls aus Stahlguss hergestellte Sperrraste 5 ist mit einer Durchbohrung 51 versehen, durch die eine Achse 52 geführt ist, welche in die beiden zueinander fluchtenden Achsbohrungen 17 des Gehäuses 1 die Seitenwangen 12 verbindend befestigt sind. Im Ausführungsbeispiel ist die Achse 52 in Art eines Niets ausgebildet. An die Sperrraste 5 ist mittig ein Sperrelement 53 angeformt, dessen Außenkontur im Wesentlichen der durch die von zwei benachbarten Flanken des Zahnrades 21 begrenzten Einkerbung gebildeten Kontur entspricht, in welche das Sperrelement 53 eingreift. Zu beiden Seiten des Sperrelements 53 sind an der Sperrraste 5 Gleitschrägen 54 eingeformt.

Die Anschlagplatte 6 ist im Wesentlichen rechteckig ausgebildet und weist an einem Ende einen winklig ausgestellten, verbreiterten Flanschabschnitt 61 auf, der über seine Breite mit einem Langloch 62 versehen ist. Der Querschnitt der Anschlagplatte 6 entspricht im Wesentlichen dem Querschnitt der Schlitze 18 der Seitenwangen 12, in welche die Anschlagplatte 6 von beiden Seiten einschiebbar ist. Dabei ist der Flanschabschnitt 61 derart abgewinkelt ausgebildet, dass dessen Anlagefläche 611 im eingeschobenen Zustand in einer Ebene mit den Außenkanten der Seitenwangen 12 des Gehäuses 11 liegt.

Der Spannhebel 3 ist mit seinen Funktionsabschnitten 312, 322 derart zwischen den Seitenwangen 12 des Gehäuses 1 positioniert, dass deren zweiten Durchführungsbohrungen 36 mit den ersten Durchführungsbohrungen 15 des Gehäuses 1 fluchten. In die zweiten Durchführungsbohrungen 36 der Funktionsabschnitte 312, 322 ist jeweils eine bevorzugt aus Kunststoff hergestellte Gleitbuchse 71 eingesetzt, wobei zwischen den beiden Gleitbuchsen 71 das Zahnrad 21 positioniert ist. Zwischen den Funktionsabschnitten 312, 322 und den Seitenwangen 12 ist weiterhin jeweils eine Distanzscheibe 72 positioniert. Die Spannwelle 2 ist - je nach gewünschter Positionierung des Kupplungsstücks 22 - von einer Seite die Gleitbuchsen 71, die Distanzscheiben 72 sowie dem Durchbruch 211 des Zahnrads 21 durchdringend durch die ersten und zweiten Durchführungsbohrungen 15, 36 des Spannhebels 3 bzw. des Gehäuses 1 geführt, so dass der Kragen 23 der Spannwelle 2 an einer Seitenwange 12 anliegt. An ihrer dem Kragen 23 gegenüberliegenden Seite ist ein mit einer Unterlegscheibe 73 versehener Niet 74 in eine hierfür axial in die Spannwelle 2 eingebrachte - nicht dargestellte - Bohrung eingenietet, wodurch die Spannwelle 2 axial in dem Gehäuse 1 fixiert ist. In dieser Anordnung greift der Mitnehmer 45 der Mitnehmerraste 4, durch die zwischen der ersten Federachse 43 der Mitnehmerraste 4 und der zweiten Federachse 39 des Spannhebels 3 angeordnete - nicht dargestellte - Feder vorgespannt, in die Verzahnung des Zahnrades 21 ein. Auf der gegenüberliegenden Seite greift das Sperrelement 53 der Sperrraste 5 in die Verzahnung des Zahnrades 21 ein, wobei die Sperrraste durch eine Blattfeder 19, die an der Grundplatte 11 in deren Ausnehmung 14 hineinragend befestigt ist, gegen die Verzahnung des Zahnrades 21 vorgespannt ist. Wird der Spannhebel 3 in Richtung der Anschlagplatte 6 verschwenkt, so wird das Zahnrad 21 über den gegen dieses vorgespannten Mitnehmer 45 der Mitnehmerraste 4 gedreht, was zugleich eine Drehung der mit dem Zahnrad 21 drehfest verbundenen Spannwelle sowie des an diese angeformten Kupplungsstücks 22 bewirkt. Während der Drehung des Zahnrades 21 gleitet das Sperrelement 53 der Sperrraste 5 entlang dessen Verzahnung, gegen die es über die Blattfeder 19 vorgespannt ist. Wird der Spannhebel 3 zurückgeschwenkt, gereift das Sperrelement 53 in die Verzahnung des Zahnrades 21 ein, wodurch dessen Drehung gehemmt ist. Der Mitnehmer 45 der Mitnehmerraste 4 gleitet hierbei nun entlang der Verzahnung des Zahnrades 21. Auf diese Weise kann durch wiederholtes Verschwenken des Spannhebels 3 eine fortwährende Drehung der Spannwelle 2 mit dem an dieser angeformten Kupplungsstück 22 bewirkt werden, auf das in montierter Position des Horizontalspanners das Standrohr eines Seitenspannplansystems aufgesteckt ist, wodurch die Spannung der Seitenplane in horizontaler Richtung erzielt wird. Zur Entspannung der Seitenplane ist ein Freilaufen des Zahnrades 21 der Spannwelle 2 erforderlich. Hierzu wird die Mitnehmerraste 4 entgegen dem Zahnrad 21 verschwenkt, bis der Quersteg 44 in den - nicht dargestellten - Mulden der Funktionsabschnitte 312, 322 des Spannhebels 3 anliegt. Sodann wird der Spannhebel 3 verschwenkt, wobei die Nocken 37 des Spannhebels 3 entlang der Gleitschrägen 34 der Sperrraste 5 gleiten und diese entgegen der Vorspannung der Blattfeder 19 aus dem Bereich des Zahnrades 21 herausbewegt. Da in dieser Position weder das Sperrelement 53 der Sperrraste 5 noch der Mitnehmer 45 der Mitnehmerraste 4 mit dem Zahnrad 21 im Eingriff ist, kann das Zahnrad 21 und damit auch die mit diesem verbundenen Spannwelle 2 frei drehen.

In einer weiteren - nicht dargestellten - Ausführungsform sind die beiden Hebelblätter 31, 32 identisch ausgebildet, wobei zwischen dem Bedienabschnitt 311, 321 und dem Funktionsabschnitt 312, 322 jeweils ein Winkelabschnitt 323 angeordnet ist, derart, dass die Funktionsabschnitte 312, 322 der beiden Hebelblätter 31, 32 bei aneinander liegenden Bedienabschnitten 311, 321 beabstandet gegenüberliegend positioniert sind. Dabei sind an beiden Seitenkanten des Funktionsabschnitts 312, 322 des Hebelblatts 31, 32 in Höhe der zweiten Durchführungsbohrung 36 gegenüberliegend zwei Nocken 37 angeformt. Zur Reduzierung der erforderlichen Höhe der Seitenwangen 12 des Gehäuses 1 sind in dessen Grundplatte 11 in Höhe der Nocken 17 Vertiefungen oder Ausbrüche angeordnet, in welche in eingeschwenkter Position des Spannhebels 3 die der Grundplatte 11 zugewandten Nocken 37 der Hebelblätter 31, 32 eintauchen. Die Hebelblätter 31, 32 sind vorzugsweise als Blechstanzbiegeteile ausgebildet.

## Patentansprüche

1. Horizontalspanner für ein Seitenspannplanensystem, umfassend ein Gehäuse (1) mit einer Spannwelle (2), die an einem Ende ein außerhalb des Gehäuses (1) seitlich angeordnetes Kupplungsstück zur drehfesten Verbindung mit einem Standrohr des Seitenspannplanensystems aufweist und auf der ein Zahnrad (21) drehfest angeordnet ist, über das die Spannwelle (2) mittels eines schwenkbar angeordneten Spannhebels (3) antreibbar ist, wobei das Gehäuse (1) an seiner dem Spannhebel (3) gegenüberliegenden Seite eine Befestigungsplatte (6) aufweist, **dadurch gekennzeichnet, dass** das Gehäuse (1) und der Spannhebel (3) eine erste Durchführung aufweisen, in welche die Spannwelle (2) von beiden Seiten einsetzbar ist, wobei die Befestigungsplatte (6) einen aus dem Gehäuse (1) auskragenden Anschlussflansch (61) aufweist und wobei in das Gehäuse (1) eine zweite Durchführung eingebracht ist, in welche die Befestigungsplatte (6) von beiden Seiten einsetzbar ist.

2. Horizontalspanner nach Anspruch 1, **dadurch gekennzeichnet, dass** der Anschlussflansch (61) derart versetzt an der Befestigungsplatte angeordnet ist, dass er auf einer Ebene mit der dem Spannhebel (3) entgegengesetzten Gehäuseseite liegt.

3. Horizontalspanner nach Anspruch 1 oder 2, **dadurch gekennzeichnet, dass** der Spannhebel (3) durch zwei einen Bedienabschnitt (311, 321) und einen Funktionsabschnitt (312, 322) aufweisende Hebelblätter (31, 32) gebildet ist, deren Funktionsabschnitte (312, 322) bei aneinander liegenden Bedienabschnitten (311, 321) beabstandet zueinander beidseitig des Zahnrades (21) angeordnet sind.

4. Horizontalspanner nach Anspruch 3, **dadurch gekennzeichnet, dass** die Hebelblätter (31, 32) identisch ausgebildet sind.

5. Horizontalspanner nach einem der vorgenannten Ansprüche, **dadurch gekennzeichnet, dass** der Spannhebel (3) mit einer Mitnehmerraste (4) versehen ist, die schwenkbar an dem Spannhebel (3) gegen das Zahnrad (21) über ein erstes Federelement vorgespannt gelagert ist und derart ausgebildet ist, dass sie bei Schwenkbewegung des Spannhebels (3) in Spannrichtung an einer Flanke des Zahnrades (21) anliegt und dieses antreibt und bei Schwenkbewegung entgegen der Spannrichtung federnd an dem Zahnrad (21) entlang gleitet.

6. Horizontalspanner nach Anspruch 5, **dadurch gekennzeichnet, dass** die Mitnehmerraste (4) derart verschwenkbar an dem Spannhebel (3) angeordnet ist, dass sie aus dem Eingriffsbereich des Zahnrades (21) heraus schwenkbar ist.

7. Horizontalspanner nach Anspruch 6, **dadurch gekennzeichnet, dass** die Mitnehmerraste (4) zwei seitlich auskragende Stege aufweist, die in einer ausgeschwenkten Position der Mitnehmerraste (4), in der diese außer Eingriff mit dem Zahnrad (21) ist, in jeweils einer in dem Spannhebel (3) eingebrachten Mulde anliegen.

8. Horizontalspanner nach einem der Ansprüche 5 bis 7, **dadurch gekennzeichnet, dass** an dem Gehäuse eine Sperraste (5) schwenkbar gelagert und gegen das Zahnrad (21) über ein zweites Federelement vorgespannt angeordnet ist, die derart ausgebildet ist, dass sie bei Rotation des Zahnrades (21) in Spannrichtung federnd an diesem entlang gleitet und eine Rotation des Zahnrades (21) entgegen der Spannrichtung durch Anlage an einer dessen Flanken blockiert.

9. Horizontalspanner nach Anspruch 8, **dadurch gekennzeichnet, dass** an dem Spannhebel (3) wenigstens ein Nocken (37) zur Auslenkung der Sperrraste (5) entgegen ihrer Vorspannung angeordnet ist.

10. Horizontalspanner nach Anspruch 9, **dadurch gekennzeichnet, dass** der Spannhebel (3) durch zwei identisch ausgebildete Hebelblätter (31, 32) gebildet ist, deren Funktionsabschnitte (312, 322) jeweils an ihren beiden Längsseiten einen Nocken (37) aufweisen.

11. Horizontalspanner nach Anspruch 10, **dadurch gekennzeichnet, dass** in die Grundplatte (11) des Gehäuses (1) wenigstens eine Vertiefung oder eine Ausnehmung eingebracht ist, in welche in eingeschwenkter Position des Spannhebels (3) die der Grundplatte (11) zugewandten Nocken (37) der Hebelblätter (31, 21) eintauchen.

## Claims

1. Horizontal tensioner for a lateral tarpaulin tensioning system comprising a housing (1) with a tensioning shaft (2), which has on one end a coupling piece laterally arranged outside the housing (1) for a non-rotatable connection to a standpipe of the lateral tarpaulin tensioning system and on which a gear wheel (21) is non-rotatably arranged, via which the tensioning shaft (2) is drivable by means of a pivotably arranged tension lever (3), wherein the housing (1) has a mounting plate (6) on its side opposite the tension lever (3), **characterised in that** the housing (1) and the tension lever (3) have a first passage, in which the tensioning shaft (2) can be inserted from both sides, wherein the mounting plate (6) has a connecting flange (61) projecting from the housing (1) and wherein a second passage is inserted in the housing (1), in which the mounting plate (6) can be inserted from both sides.

2. Horizontal tensioner according to claim 1, **characterised in that** the connecting flange (61) is arranged offset on the mounting plate in such a manner that it is on one level with the housing side opposite the tension lever (3).

3. Horizontal tensioner according to claim 1 or 2, **characterised in that** the tension lever (3) is formed by two lever blades (31, 32) having an operating section (311, 321) and a functional section (312, 322), whose functional sections (312, 322) are arranged at a distance from one another on both sides of the gear wheel (21) when the operating sections (311, 321) rest against one another.

4. Horizontal tensioner according to claim 3, **characterised in that** the lever blades (31, 32) are of identical design.

5. Horizontal tensioner according to one of the previous claims, **characterised in that** the tension lever (3) is provided with a driver detent (4), which is pivotably mounted at the tension lever (3) prestressed against the gear wheel (21) via a first spring element and is designed in such a manner that it rests on a flank of the gear wheel (21) upon a pivoting movement of the tension lever (3) in the tensioning direction and drives it and resiliently glides along the gear wheel (21) upon a pivoting movement counter to the tensioning direction.

6. Horizontal tensioner according to claim 5, **characterised in that** the driver detent (4) is arranged on the tension lever (3) to be pivotable in such a manner that it can be pivoted out of the engagement area of the gear wheel (21).

7. Horizontal tensioner according to claim 6, **characterised in that** the driver detent (4) has two laterally projecting webs, which, in a pivoted-out position of the driver detent (4) in which it is disengaged from the gear wheel (21), rest in a trough, respectively, inserted in the tension lever (3).

8. Horizontal tensioner according to one of claims 5 to 7, **characterised in that** a locking detent (5) is pivotably mounted on the housing and prestressed against the gear wheel (21) via a second spring element, which is designed in such a manner that upon rotation of the gear wheel (21) it resiliently glides along the latter in the tensioning direction and prevents a rotation of the gear wheel (21) counter to the tensioning direction by bearing on one of its flanks.

9. Horizontal tensioner according to claim 8, **characterised in that** at least one cam (37) is arranged on the tension lever (3) for deflecting the locking detent (5) counter to its prestress.

10. Horizontal tensioner according to claim 9, **characterised in that** the tension lever (3) is formed by two identically designed lever blades (31, 32), whose functional sections (312, 322) respectively have a cam (37) on their two longitudinal sides.

11. Horizontal tensioner according to claim 10, **characterised in that** at least one depression or recess is inserted in the base plate (11) of the housing (1), in which, in an inwardly pivoted position of the tension lever (3), the cams (37) of the lever blades (31, 21) facing the base plate (11) plunge.

## Revendications

1. Tendeur horizontal pour un système de bâches tendues latéralement, comprenant un boîtier (1) avec un arbre tendeur (2) qui présente à une extrémité une pièce d'accouplement disposée latéralement hors du boîtier (1), pour établir une jonction rigide en torsion avec un tube vertical du système de bâches tendues latéralement et sur lequel arbre est disposé, bloqué en rotation, un pignon (21) via lequel l'arbre tendeur (2) peut être entraîné au moyen d'un levier tendeur (3) disposé pivotant, sachant que le boîtier (1) présente une plaque de fixation (6) sur son côté faisant face au levier tendeur (3), **caractérisé en ce que** le boîtier (1) et le levier tendeur (3) présentent un premier passage dans lequel l'arbre tendeur (2) peut être introduit des deux côtés, sachant que la plaque de fixation (6) présente une bride de raccordement (61) faisant saillie hors du boîtier (1) et sachant que dans le boîtier (1) a été ménagé un deuxième passage dans lequel la plaque de fixation (6) peut être introduite des deux côtés.

2. Tendeur horizontal selon la revendication 1, **caractérisé en ce que** la bride de raccordement (61) est disposée décalée contre la plaque de fixation de telle manière qu'elle repose sur un même plan avec le côté du boîtier opposé au levier tendeur (3).

3. Tendeur horizontal selon la revendication 1 ou 2, **caractérisé en ce que** le levier tendeur (3) est formé par deux lames (31, 32) de levier présentant un segment de commande (311, 321) et un segment de fonction (312, 322), lames dont les segments de fonction (312, 322) se trouvent mutuellement distants des deux côtés du pignon (21) lorsque les segments de commande (311, 321) appliquent l'un contre l'autre.

4. Tendeur horizontal selon la revendication 3, **caractérisé en ce que** les lames (31, 32) de levier sont configurées à l'identique.

5. Tendeur horizontal selon l'une des revendications précédentes, **caractérisé en ce que** le levier tendeur (3) est muni d'un cliquet entraîneur (4) en appui précontraint contre le pignon (21) via un premier élément ressort tout en pouvant pivoter contre le levier tendeur (3), cliquet qui est configuré de telle sorte que lors d'un mouvement pivotant du levier tendeur (3) dans le sens de tensionnement le cliquet applique contre un flanc du pignon (21) et l'entraîne, et que lors d'un mouvement pivotant en sens inverse de celui de tensionnement il glisse de manière amortie le long du pignon (21).

6. Tendeur horizontal selon la revendication 5, **caractérisé en ce que** le cliquet entraîneur (4) est disposé pivotant contre le levier tendeur (3) de sorte qu'il peut en pivotant quitter la zone d'engrènement du pignon (21).

7. Tendeur horizontal selon la revendication 6, **caractérisé en ce que** le cliquet entraîneur (4) présente deux nervures en saillie latéralement qui - lorsque le cliquet entraîneur (4) se trouve basculé hors position, c'est-à-dire non engrené dans le pignon (21) - appliquent respectivement dans une auge ménagée dans le levier tendeur (3).

8. Tendeur horizontal selon l'une des revendications 5 à 7, **caractérisé en ce qu'**un cliquet de blocage (5) est en appui pivotant contre le boîtier et est disposé précontraint contre le pignon (21) via un second élément ressort, cliquet qui est configuré de telle sorte que lorsque le pignon (21) tourne dans le sens de tensionnement le cliquet glisse de manière amortie le long du pignon et empêche le pignon (21), en appliquant contre l'un de ses flancs, de tourner en sens inverse de celui de tensionnement.

9. Tendeur horizontal selon la revendication 8, **caractérisé en ce que** contre le levier tendeur (3) est disposé au moins une came (37) pour dévier le cliquet de blocage (5) en sens inverse de celui de sa précontrainte.

10. Tendeur horizontal selon la revendication 9, **caractérisé en ce que** le levier tendeur (3) est formé par deux lames leviers (31, 32) configurées à l'identique et dont les segments de fonction (312, 322) présentent chacun une came (37) sur leurs deux côtés longitudinaux.

11. Tendeur horizontal selon la revendication 10, **caractérisé en ce que** dans la plaque de base (11) du boîtier (1) est ménagé au moins un creux ou un évidement dans lequel plongent, lorsque le levier tendeur (3) se trouve basculé en position, les cames (37) - regardant la plaque de base (11) - des lames leviers (31, 21).
